# EUROPÄISCHE PATENTSCHRIFT

(11) **EP 1 215 002 B1**
(45) Veröffentlichungstag und Bekanntmachung des Hinweises auf die Patenterteilung: **11.07.2007**
(21) Anmeldenummer: 01129493.1
(22) Anmeldetag: 11.12.2001
(51) Int. Cl.: B23C 3/12

(54) **Vorrichtung zum Bearbeiten von Eckverbindungen**
Device for machining window corners
Dispositif pour usiner les coins d'un cadre

(30) Priorität: 15.12.2000 DE 10062842
(43) Veröffentlichungstag der Anmeldung: 19.06.2002
(73) Patentinhaber: ROTOX GmbH B. EISENBACH, 56858 Grenderich (DE)
(72) Erfinder: Eisenbach, Bernd, 65611 Brechen (DE); Schön, Christoph, 65606 Villmar-Aumenau (DE)
(74) Vertreter: Müller, Eckhard

(56) Entgegenhaltungen:
- EP-A- 0 429 417
- EP-A- 0 460 654
- DE-A- 3 209 479
- DE-A- 4 018 145
- DE-A- 4 219 088
- US-A- 5 006 198

## Beschreibung

Die Erfindung betrifft eine Vorrichtung zum Bearbeiten der Eckverbindungen von aus Profilstücken geschweißten Rahmen, wie z.B. Fenster- oder Türrahmen, mit mindestens einer an den Rahmen verfahrbaren Bearbeitungseinheit und mit Anschlagmitteln zum Halten des Rahmens in der Bearbeitungsposition, gemäß dem Oberbegriff des Anspruchs 1.

Derartige Vorrichtungen für aus Kunststoffprofilen geschweißte Rahmen, Fensterrahmen, Türrahmen oder dgl. dienen dazu, die beim Schweißen der Profile an den Schweißnähten der Eckbereiche entstandenen, nach außen ragenden Schweißraupen abzutragen und ggf. Dichtungsnuten oder dgl. Konturen zu legen. Eine wesentliche Forderung an derartige Maschinen ist ein möglichst automatisierter Betrieb.

Aus der US-A-5 006 198 ist eine Spannvorrichtung zum Schweißen von Gehrungsverbindungen zwischen Teilen von aus Kunststoff geformten Fenster- oder Türrahmen bekannt, mit zwei parallel zueinander angeordneten Schlitten, welche insgesamt vier Klemmköpfe zum Fixieren der Rahmenteile in den Eckbereichen des Rahmens tragen. Jeder Klemmkopf besitzt eine Auflage für die Rahmenteile, wobei diese Auflage in Richtung der Gehrungslinie des späteren Rahmeneckes geteilt ist. An jeder Teilauflage befindet sich ein an der Außenseite des jeweiligen Rahmenteils zur Anlage gelangender Anschlag, wobei die Anschläge eines Gehrungskopfes einen rechten Winkel zueinander bilden. Während ein Anschlag eines Anschlagpaares ortsfest bezüglich des Klemmkopfes angeordnet ist, ist der zweite Anschlag in Richtung der Gehrungslinie des jeweiligen Rahmenecks zwischen zwei Grenzpositionen zum Halten der Rahmenteile und einer Ausgangsposition zum Einlegen der Rahmenteile und Entnehmen des geschweißten Rahmens verschiebbar. Weiterhin weist die bekannte Vorrichtung Platten auf, mittels welchen die Rahmenteile während des Schweißvorgangs auf die Auflagen gepresst werden.

Aus der EP 460 654 A1 ist eine Vorrichtung zum Bearbeiten von Fensterrahmen bekannt, wobei zum Fixieren des Rahmens in der Bearbeitungsposition zwei Anschläge an den Außenseiten des Rahmens und ein Anschlag an der Innenseite des Rahmens vorgesehen sind. Der Anschlag an der Innenseite des Rahmens greift in ein Eck ein und positioniert den Rahmen derart auf einer gedachten Bearbeitungslinie, daß die Bearbeitungswerkzeuge, die genau auf dieser Linie positioniert sind, exakt die zu bearbeitende Diagonale unter sich oder über sich haben.

Nachteilig bei dieser Vorrichtung ist, daß das lichte Maß der durch die Profilschenkel gebildeten Rahmenöffnung auf 35 cm limitiert ist. Der große Abstand der Innen- und Außenanschläge hat große Verfahrwege der Bearbeitungswerkzeuge und damit eine hohe Taktzeit zur Folge. Ein weiteres Problem besteht darin, daß durch die Innenanlage eines Anschlags wenig Raum für die Bearbeitungswerkzeuge an der Innenkante des Rahmens zur Verfügung steht. Ein weiterer Nachteil ist der apparative Aufwand durch die Anordnung von zwei paar Anlagen an der Außenseite zusätzlich zu der Anlage an der Innenseite.

Eine ähnliche Vorrichtung wie aus der zuvor genannten Druckschrift ist aus der DE 32 09 479 A1 bekannt. Sie weist zwei von einer Ausgangsstellung in eine Endstellung verschiebbare Anschläge auf, die in einer Richtung senkrecht zur Diagonalen des Rahmenecks verschiebbar sind. Um das zu bearbeitende Rahmeneck mit seiner Diagonalen auf die Verfahrrichtung des Eckenbearbeitungswerkzeuges auszurichten, ist eine Rahmenhalteeinrichtung vorgesehen, welche ortsfest und mittels einer Kolben-Zylinder-Anordnung vor und zurückbewegbar am Rahmeninneneck angreift.

Davon ausgehend liegt der Erfindung die Aufgabe zugrunde, die Fixier- oder Haltevorrichtung einer Vorrichtung zur Bearbeitung von Fenster- oder Türrahmen so zu verbessern, daß sie bei einfachem Aufbau eine hohe Variabilität für die Bearbeitung von unterschiedlichen Profilschenkeln ermöglicht und daß sie einen möglichst großen freien Bearbeitungsraum an der Diagonale aufweist.

Diese Aufgabe wird erfindungsgemäß gelöst von einer Vorrichtung mit den Merkmalen des Anspruchs 1. Ausgestaltungen der Erfindung sind Gegenstände von Unteransprüchen.

Erfindungsgemäß sind also mindestens zwei Anschlagmittel vorgesehen, die an zwei Außenseiten des Rahmens angreifen. Ein an der Innenseite des Rahmens angreifendes (drittes) Anschlagmittel ist hier nicht mehr notwendig. Dabei drückt die in Richtung der Profildiagonalen verfahrbare Rahmeneinzugsvorrichtung, bspw. in Form eines ggf. vertikal verfahren Bolzens den Rahmen gegen die beiden Rahmenanschlagmittel. Das erste Anschlagmittel ist erfindungsgemäß als Rahmenfestanlage fest (ortsfest und winkelfest) am Maschinengestell ausgebildet, während das zweite Anschlagmittel als bewegliche Rahmenanlage auf einem Rahmenanlageverschiebetisch angeordnet ist, der mittels eines Verschiebe- und Arretiersystems in vorgebbare Stellungen verbringbar ist. Das erfindungsgemäße Anschlagsystem zeichnet sich durch kleinere Außenabmaße aus, so daß ein großer freier Bearbeitungsraum an der Diagonalen erreicht ist.

Mit der Erfindung lassen sich beliebige Rahmen, die aus im 90°-Winkel zusammengefügten Profilen bestehen, in der gewünschten Bearbeitungsposition fixieren. Ob eine Rahmenseite (also das entsprechende Profilstück) stärker als die benachbarte Seite ist oder ob beide Rahmenseiten gleich stark sind, spielt bei der Erfindung keine Rolle. Es gelingt für jeden gebräuchlichen Rahmen, das bewegliche Rahmenanschlagteil so einzustellen, daß bei angelegtem Rahmen die Bearbeitungslinien der unter- und oberhalb des Rahmens angebrachten Werkzeuge genau mit der Diagonallinie des Rahmens, also mit der Schweißlinie der Profilstücke, zusammenfallen.

Es wurde festgestellt, daß auf ein zentrierendes Anlagestück, wie es beim Stand der Technik an der Rahmeninnenkante des jeweils zu bearbeitenden Rahmenecks eingreift, verzichtet werden kann, und daß trotzdem die Diagonalkanten, die gerade zu bearbeiten sind, exakt auf der Linie zu liegen kommen, auf der die Bearbeitungsmittel zugreifen. Durch den Wegfall des in die Rahmeninnenkante eingreifenden Zentriermittels ist auch diese zu bearbeitende Seite des Rahmens für den Zugriff der Bearbeitungsmittel frei. Neben einer Vereinfachung - bisher waren vier Anlagemittel vorgesehen, jetzt reichen zwei Anlagemittel - führt dies außer zu einer besseren Zugänglichkeit auch noch zu einer höheren Variabilität, weil auch Rahmen aus einem oder mehreren sehr starken Profilstücken sicher festgehalten werden können. Der Verzicht auf ein Mittel, das innerhalb des Rahmenecks eingreift, erlaubt auch die Bearbeitung ausgesprochen breiter Rahmen. Durch die Erfindung werden die Vorteile eines Anlagesystems mit Innen- und Außenanlage realisiert, ohne daß die Nachteile des zusätzlichen Innenanlagesystems vorhanden sind. Auch das Problem einer Ungenauigkeit in der Führung der Werkzeuge ist vermieden, da erfindungsgemäß eine Rahmenanlage maschinenfest ist, so daß ein Fixpunkt bzw. ein Referenzpunkt für die Steuerung, welcher vorteilhafterweise mit einer Spitze des Rahmenecks zusammenfallen kann, vorhanden ist.

In einer bevorzugten Ausführung der Erfindung weisen die Rahmenfestanlage und die bewegliche zweite Rahmenanlage einen Winkel von 90° auf. Dies entspricht den üblichen Rahmen von Fenster-, Tür- oder Bilderrahmen und ermöglicht, daß die Diagonallinie der Rahmenprofile immer parallel zu der Bearbeitungslinie der Arbeitswerkzeuge verläuft. Es ist dann allein durch die eindimensionale Voreinstellung des beweglichen Anschlagteiles dafür zu sorgen, daß die zu bearbeitende Linie exakt auf der Linie liegt, in der die Bearbeitungswerkzeuge verlaufen. Dies ist jedoch durch die erfindungsgemäße Schlittenführung des zweiten Anlagemittels einfach möglich.

Deshalb ist der Rahmenanlageverschiebetisch bevorzugt im 45°-Winkel zur Rahmenfestanlage verschiebbar. Diese Richtung entspricht in der Regel der Diagonalrichtung des Rahmens und der Fügelinie der zwei hier zusammenstoßenden Profilstücke. So lassen sich alle Rahmengrößen und -stärken bearbeiten. Das bewegliche Anschlagmittel ist allein durch eindimensionales Verschieben des es tragenden Rahmenanlageverschiebetisches immer in so eine Stellung verfahrbar, daß bei aufgelegtem Rahmen dessen zu bearbeitende Diagonale genau in der Linie fixiert ist, in der die Bearbeitungswerkzeuge von oben oder von unten zugreifen.

In einer bevorzugten Ausführungsform der Erfindung ist das Verschiebe- und Arretiersystem pneumatisch betrieben und weist pneumatisch betriebene Verschiebezylinder zum Bewegen des Rahmenanlageverschiebetisches und pneumatisch bewegbare Anschläge zum Fixieren des Tisches auf. Bevorzugt sind mehrere Anschläge vorgesehen, so daß mehrere Positionen (entsprechend mehreren unterschiedlichen Rahmengrößen oder entsprechend mehreren unterschiedlichen Rahmenstärkenkombinationen) angefahren werden können. Eine Ausführung weist zehn unterschiedliche Anschläge auf, so daß zehn unterschiedliche Stellungen anfahrbar sind. Dabei können zehn Zylinder vorgesehen sein, die in den Bewegungsweg von zehn unterschiedlich einstellbaren Positionsverstellschrauben verbringbar sind, so das Anfahren zehn beliebig vorhergebbarer Stellungen möglich ist.

Das Verfahr- und Arretiersystem der Erfindung kann auch von Hand oder mechanisch (Schlitten- oder Spindeltrieb und Rastungen), hydraulisch (Stellzylinder mit vorgebbaren Positionen) oder elektrisch (Elektromotor zum Verfahren des Verschiebeschlittens und Schalter an vorgebbaren Stellen) arbeiten. Ebenso sind Mischformen unter diesen Arten und/oder mit einer Pneumatik möglich. Zum Beispiel kann ein elektrischer Antrieb mit mechanischen Verrastungen kombiniert sein oder ein hydraulischer Antrieb mit elektromagnetisch betätigte Rastungen. Stets muß erfindungsgemäß der Rahmenanlageverschiebetisch in irgendeiner Weise verfahren und dann am vorgesehenen Ort gestoppt werden, damit der Rahmen am gewünschten Ort und in der richtigen Orientierung liegt.

Das Verschiebe- und Arretiersystem kann auch vollkommen elektrisch ausgebildet sein, wobei der Schlitten dann computer- oder mikroprozessorprogrammiert genau auf die gewünschte Stellung verfährt. Dies kann z.B. mittels eines Servomotors erfolgen, dem anzufahrende Drehwinkel vorgegeben werden können, so daß er den Verschiebetisch exakt auf bestimmte voreingegebene Werte fährt und somit die Bearbeitungsposition exakt auf die zu bearbeitenden Rahmendicken oder Rahmendickenkombination einstellen kann. Statt eines Servoantriebs können auch Schrittmotoren oder andere Aktoren und/oder Getriebe verwendet werden, die einen Schlitten mittels einer Steuerung äußerst genau in beliebige Stellungen verfahren können.

Weitere Ziele, Vorteile, Merkmale und Anwendungsmöglichkeiten der vorliegenden Erfindung ergeben sich anhand einer in der Zeichnung gezeigten Ausführung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Es zeigen:
- Figur 1: eine Teilansicht einer erfindungsgemäßen Vorrichtung zum Bearbeiten von Eckverbindungen in einer Ausgangsstellung,
- Figur 2: die Vorrichtung gemäß Fig. 1 mit einem Fensterrahmen in einer bestimmten Bearbeitungsstellung,
- Figuren 3 und 4: die Vorrichtung mit gedrehtem Fensterrahmen in zwei unterschiedlichen Stellungen,
- Figur 5: eine Vorderansicht der Vorrichtung mit unterschiedlichen Werkzeugbänken und
- Figur 6: eine Seitenansicht der erfindungsgemäßen Vorrichtung mit Werkzeugbänken in einer neutralen Bearbeitungsstellung.

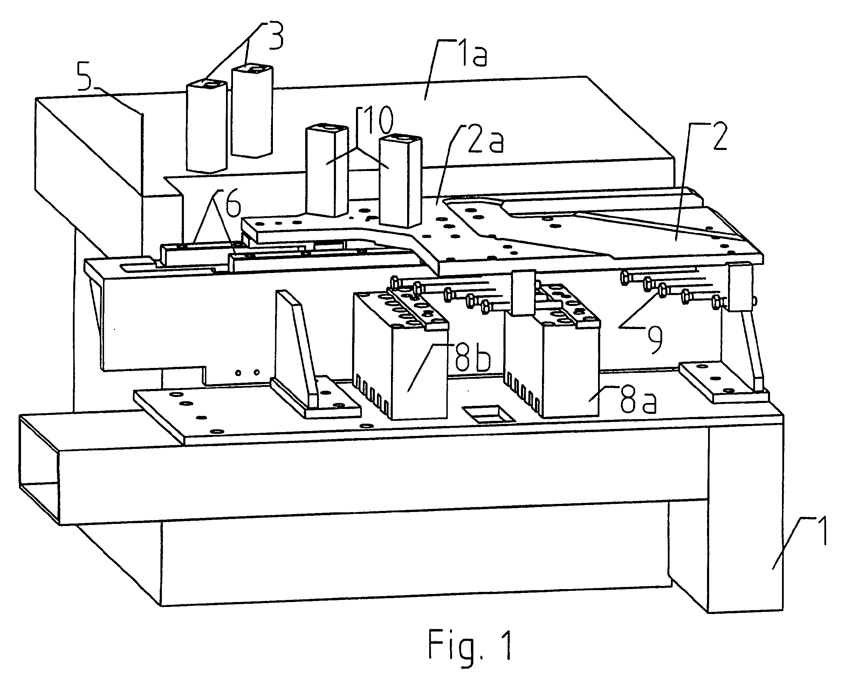

Figur 1 zeigt den Teil einer erfindungsgemäßen Vorrichtung zum Bearbeiten von Fensterrahmen. Dabei dient die erfindungsgemäße Einrichtung der Fixierung des Fensterrahmens, in Grundstellung. Nicht gezeigt sind die Rahmen oder die Werkzeughalter, die die Fräser oder die anderen Bearbeitungseinrichtungen tragen. Gezeigt sind hier nur die Vorrichtungen, die dazu dienen, den Fensterrahmen in einer bestimmten Bearbeitungsstellung zu halten.

Die Vorrichtung weist ein Maschinengestell 1 auf, welches ortsfest ist und eine ebene, waagrechte Auflagefläche 1a zur Aufnahme des zu bearbeitenden Rahmens hat. Ein Rahmenanlageverschiebetisch 2 ist in einer Richtung verschieblich am Maschinengestell 1 geführt. Seine Oberseite bildet eine zweite Auflagefläche 2a für den Rahmen. Die Auflagefläche 1a weist als erstes Anschlagmittel für den Rahmen die ortsfesten Rahmenfestanlage 3 auf, die hier aus zwei nebeneinander stehenden Quadern gebildet ist, deren Anlageflächen für den Rahmen in einer 45° Diagonalrichtung zur Verschieberichtung des Rahmenanlageverschiebetisches 2 stehen.

Der Rahmenanlageverschiebetisch 2 trägt als zweites Anschlagmittel für den Rahmen die zweite oder die bewegliche Rahmenanlage 10, die hier wiederum aus zwei nebeneinanderstehenden Quadern gebildet ist. Die Anlagekanten dieser Rahmenanlage 10 sind ebenfalls wieder im 45° Winkel gegen die Verschieberichtung angeordnet und bilden so gegenüber den Anlagekanten der Rahmenfestanlage 3 einen 90° Winkel. Die Rahmenanlagen 3, 10 stehen so zueinander, daß sie die beiden benachbarten Rahmenaußenseiten des zu bearbeitenden Rahmenecks halten können.

Mit Bezugszeichen 5 ist ein Rahmenfixpunkt bezeichnet, der als interner NC-Maßpunkt zur Programmerstellung verwendet werden kann. Dieser Punkt 5 liegt in der Verlängerungslinie der beiden Anlagekanten der Rahmenfestanlage 3, und zwar genau dort, wo die Diagonale des Rahmens 4 - und die Bearbeitungslinie der hier nicht gezeigten Werkzeuge - verläuft.

Der Rahmenanlageverschiebetisch 2 ist mittels der Verschiebeführung 6 nach links und rechts verschiebbar. Diese Bewegungsrichtung entspricht der Diagonalrichtung des aufgelegten Fensterrahmens 4 und damit der Bearbeitungsrichtung der Bearbeitungswerkzeuge.

Der Antrieb des Rahmenanlageverschiebetisches 2 längs der Verschiebeführung 6 ist in den Figuren 1 bis 4 nicht zu sehen, da er unter dem Rahmenanlageverschiebetisch 2 angeordnet ist. Zum Arretieren sind bei dieser Ausführung an der Unterseite des Rahmenanlageverschiebetisches 2 zwei Reihen von Positionsverstellschrauben 9 vorgesehen, die sich unterschiedlich tief einschrauben lassen und die mit maschinengestellfesten Anschlagzylindern 8 (in Figur 1 ist keiner ausgefahren oder zu erkennen, sie liegen alle in den beiden maschinenfesten Blöcken 8a und 8b verborgen) zusammenwirken. Der Rahmenanlageverschiebetisch 2 ist über die Verschiebeführung 6 beliebig gegenüber dem Maschinengestell 1 verschiebbar; seine Anlage 10 behält jedoch immer einen 90°-Winkel gegen die Festanlage 3 bei.

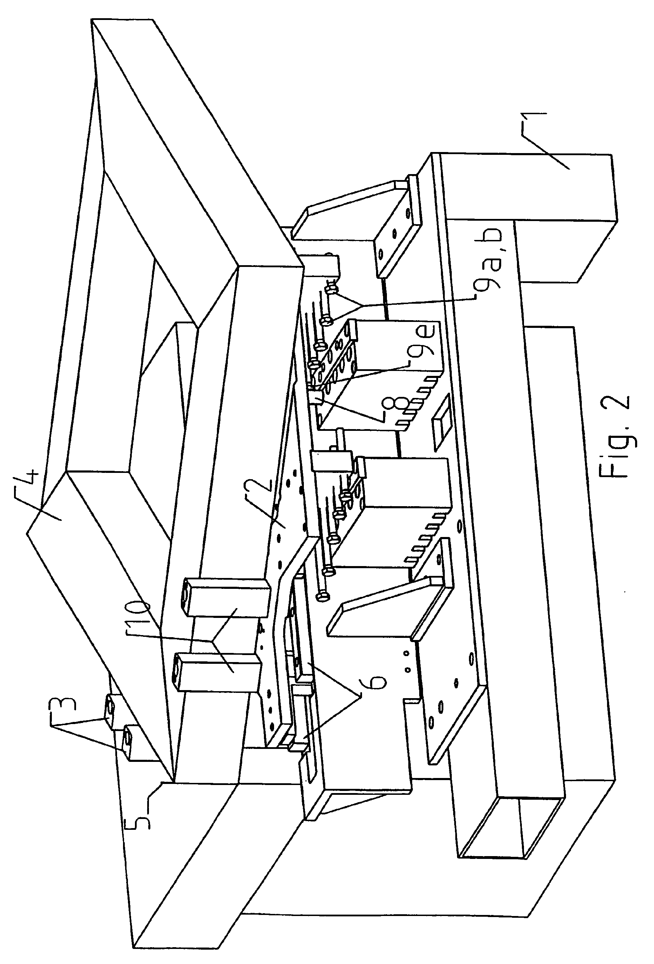

Figur 2 zeigt nun die gleiche Vorrichtung, wobei auf die feste Auflagefläche 1a und die bewegliche Auflagefläche 2a ein Rahmen 4 aufgelegt ist, der in dieser Ausführung aus drei gleich starken Profilteilen und einem schmäleren Profilteil (in der Fig. 2 hinten rechts) besteht, die an den Diagonallinien jeweils miteinander verschweißt sind. Der Rahmenanlageverschiebetisch 2 ist so verschoben und arretiert, daß die Anlage 10 und die Rahmenfestanlage 3 den Rahmen 4 am Maschinengestell 1 so halten, daß die Rahmenecke im Fixpunkt 5 liegt. Damit verläuft die zu bearbeitende Fügelinie oder Diagonale exakt durch den Rahmenfixpunkt 5 und beginnt dort. Um diese Stellung zu erreichen, wurde der Rahmenanlageverschiebetisch 2 so weit nach links verschoben, bis die Positionsverstellschraube 9e an den ausgefahrenen pneumatischen Anschlagzylinder 8 anstieß. Die Lage des Rahmenanlageverschiebetisches 2 ist dadurch exakt definiert, ebenso die Lage des Rahmens 4. Um ein Ausweichen des Rahmens zu verhindern, ist ein pneumatischer Verschiebezylinder 7 vorgesehen, welcher den Rahmen 4 in Richtung der Rahmenfestanlage 3 drückt.

Zu erkennen ist, daß die anderen Positionsverstellschrauben, z.B. die Positionsverstellschrauben 9a, 9b der gleichen Gruppe von Positionsverstellschrauben, tiefer eingeschraubt sind und damit weniger herausragen. Wäre einer der Anschlagzylinder 8, die im Verfahrweg dieser anderen Positionsverstellschrauben liegen, ausgefahren, so wäre der Rahmenanlageverschiebetisch 2 in einer etwas anderen, weiter linken Stellung fixiert. Die hier gezeigte Stellung entspricht der Normalstellung, bei der an der Anlage 3 und der Anlage 10 Rahmenprofile gleicher Breite liegen - unabhängig von der Rahmenstärke. Die Anlage 10 ist genau auf die "Höhe" der festen Anlage 3 verfahren, d.h. die jeweiligen Verlängerungslinien der beiden Rahmenanlagen 3 und 10 bilden mit der Profildiagonalen einen gemeinsamen Schnittpunkt, den Rahmenfixpunkt 5.

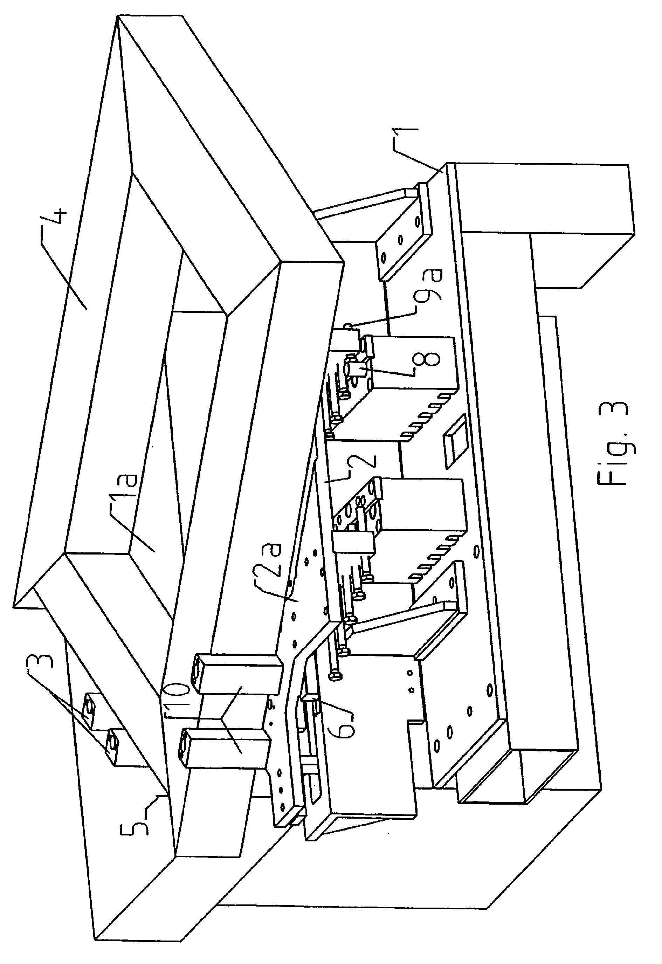

In Figur 3 ist eine andere Stellung gezeigt. Die CNC-Steuerung ist so programmiert, daß der Rahmenanlageverschiebetisch 2 weiter nach links verschoben ist, da der Rahmen 4 so verdreht wurde, daß nun auch ein dünneres Profilteil anliegt. Als einziger Anschlag ist hier ein anderer pneumatischer Anschlagzylinder 8 ausgefahren, nämlich der, der mit der Positionsverstellschraube 9a zusammenwirkt. Der Rahmenanlageverschiebetisch 2 ist damit zusammen mit der zweiten Rahmenanlage 10 etwas weiter nach links verfahren, so daß der jetzt um 90° gedrehte, aber immer noch auf den Flächen 1a und 2a liegende Rahmen 4 nun trotz der unterschiedlich starken Rahmenprofile wiederum von den Anlagen 3 und 10 so gehalten ist, daß die zu bearbeitende Diagonale exakt durch den Rahmenfixpunkt 5 verläuft, auf dem die Bearbeitungswerkzeuge parallel zur Bewegungsrichtung des Rahmenanlageverschiebetisches 2 verfahren werden können.

Weiter zu erkennen ist, daß auch die Innenseite des Rahmens 4 von oben oder von unten für die Bearbeitungswerkzeuge gut zugänglich ist. Dies ist ein Vorteil gegenüber den bekannten Anlagesystemen, die an der Innenseite des Rahmens zentrierend angreifen.

Welche der pneumatischen Anschlagzylinder 8 mm ausgefahren sind, bestimmt die numerische Steuerung der Anlage. Bei Eingabe der Profilbreiten und/oder der Kombination unterschiedlicher Profilbreiten kann so automatisch für jede Profilbreite oder jede Kombination unterschiedlicher Profilbreiten die richtige Bearbeitungslinie eingestellt werden, d.h. die Diagonale des Rahmeneckes kann immer wieder genau auf die Linie gebracht werden, die durch den Fixpunkt 5 läuft und auf der die Bearbeitungswerkzeuge geführt sind.

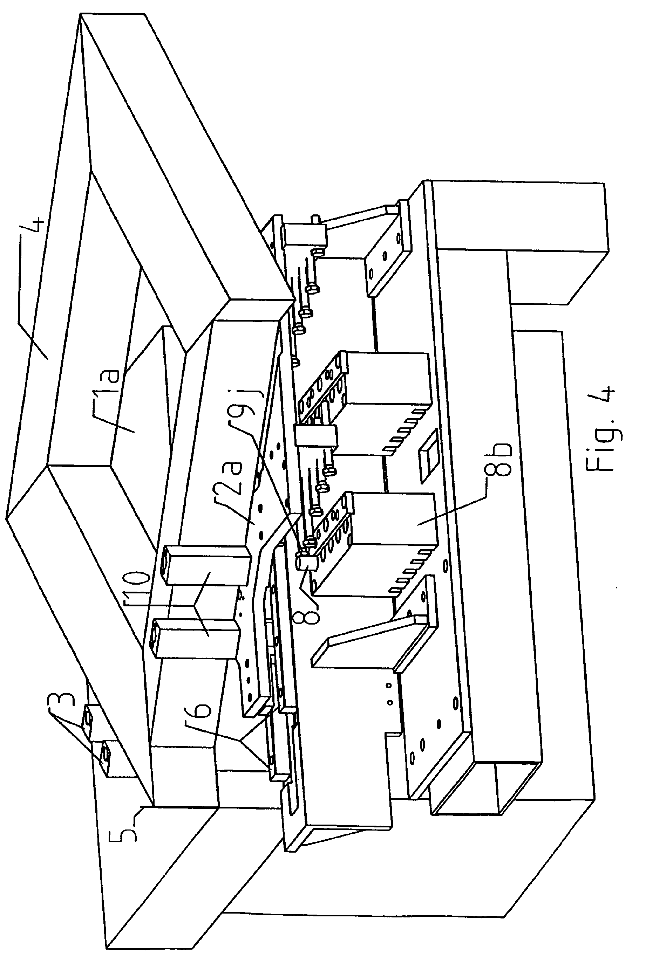

Figur 4 zeigt die gleiche Ausführung wie Figur 3 in einer nochmals anderen Stellung. Diesmal ist die nächste Diagonalkante des Rahmens 4 zu bearbeiten. Der Rahmen 4 liegt wieder auf den Flächen 1a und 2a auf und ist nochmals um 90° weitergedreht. Nunmehr ist im anderen Block 8b der pneumatische Anschlagzylinder 8 ausgefahren, der mit der Positionsverstellschraube 9j zusammenwirkt. Der Rahmenanlageverschiebetisch 2 ist also relativ weit rechts fixiert, weil der vorne liegende dünne Rahmenteil dazu zwingt, daß der Rahmenanlageverschiebetisch 2 relativ weit rechts steht, damit die zu bearbeitende Diagonallinie wieder durch den Rahmenfixpunkt 5 verläuft.

So kann mit dem erfindungsgemäßen Verfahr- und Arretiersystem eine Vielzahl von Profilbreiten und Profilbreitenkombinationen bearbeitet werden. Je Profilbreitenkombination mit unterschiedlicher Breitendifferenz sind zwei Anschlagzylinder 8 vorgesehen, was acht Anschlagzylinder 8 für vier Kombinationen ergibt. Bei dem hier gezeigten Ausführungsbeispiel sind zehn Positionsverstellschrauben 9a bis 9j mit je einem Anschlagzylinder 8 vorgesehen, wodurch vier Kombinationen mit unterschiedlicher Breite der jeweiligen Profilschenkel und dadurch unterschiedlicher Lage des Rahmenecks, einschließlich Neutralstellung, innerhalb des Anlagesystems ermöglicht sind.

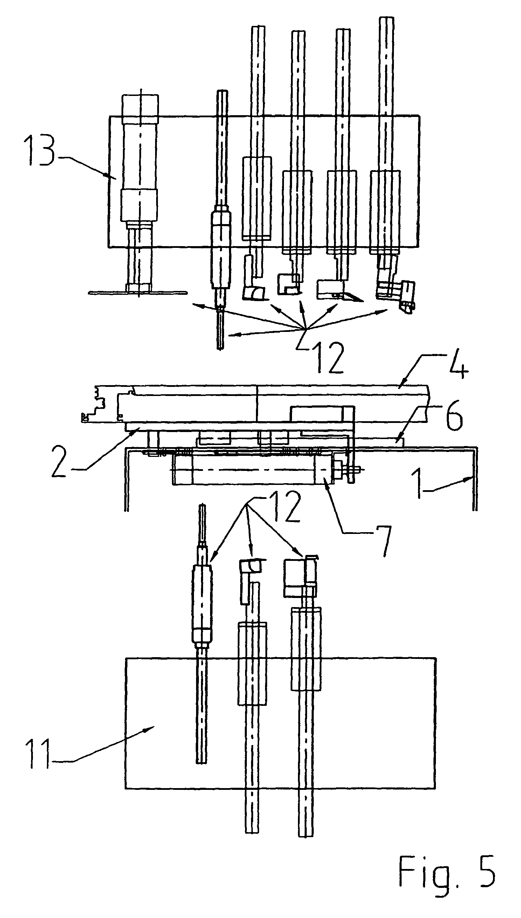

Figur 5 zeigt eine Vorderansicht einer erfindungsgemäßen Anlage, wobei zusätzlich zu den bisher gezeigten Positioniervorrichtungen die untere Werkzeugbank 11 mit ihren Werkzeugen 12 und die obere Werkzeugbank 13 mit ihren Werkzeugen 12 eingezeichnet sind. Die Werkzeugbank 13 trägt Werkzeuge 12 zum Schleifen, zum Bohren, zum Fräsen, zum Räumen und zum Bearbeiten der waagrechten wie der senkrechten Kanten (also der Rahmenflächen und der Rahmeninnen- oder - außenseiten). Zu erkennen sind im Maschinengestell 1 eine Verschiebeführung 6 und der pneumatische Verschiebezylinder 7, der parallel zu den oberen und unteren Werkzeugbänken 11 und 13 den Rahmenanlageverschiebetisch 2 nach rechts und links bewegt. Aufgelegt ist der Rahmen 4, wobei hier auf einen Schnitt durch die Diagonale des Rahmens 4 geblickt wird und die zu bearbeitende Rahmendiagonale in der Blattebene liegt. Die Werkzeugbänke 11 und 13 sowie der pneumatische Schiebezylinder 7 liegen auch in der Blattebene und damit ebenfalls exakt längs dieser Diagonale des Rahmens 4. Diese Diagonale wird dann von den Werkzeugen 12 von oben und von unten wie gewünscht bearbeitet.

Das Heranfahren der Werkzeuge 12 an den Rahmen 4 und das Führen der Werkzeuge 12 längs der zu bearbeitenden Rahmendiagonale erfolgt bevorzugt wiederum CNC-gesteuert. Durch tieferes Eintauchen und/oder Verschwenken der Werkzeuge 12 lassen sich neben den Rahmenober- und -unterseiten auch die Rahmenaußenseiten und die Rahmeninnenseiten der Diagonalen wie gewünscht bearbeiten. Schweißraupen können entfernt werden, Rahmenfugen können durch Werkzeuge, die nach innen greifen ebenfalls von überstehenden Schweißraupen oder anderen Obstruktionen befreit werden. Durch die Erfindung ist die zu bearbeitende Rahmendiagonale von oben, von unten, von links und von rechts gleichzeitig zugänglich, wobei trotzdem der Fensterrahmen 4 ausreichend fest in der gewünschten Position gehalten wird.

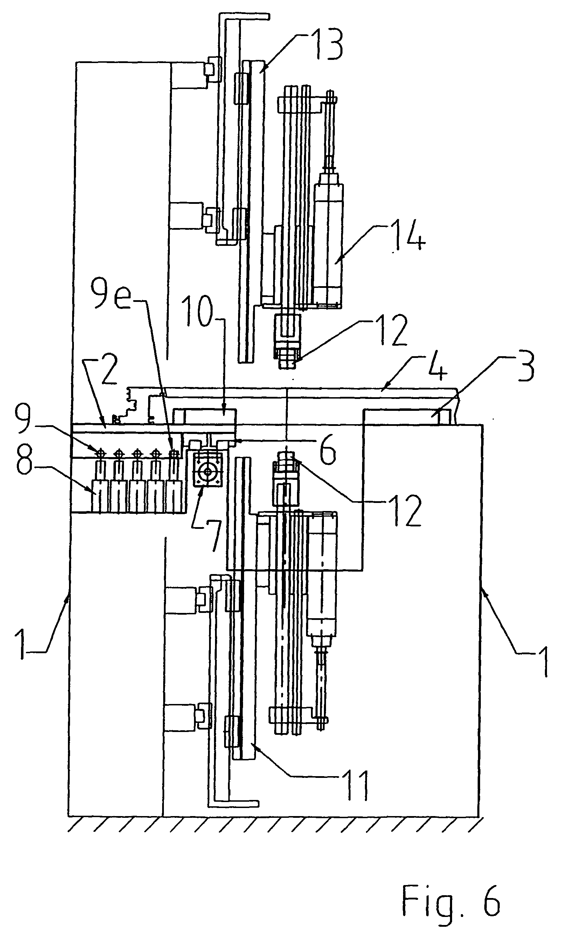

Figur 6 zeigt schließlich eine Seitenansicht der erfindungsgemäßen Rahmenbearbeitungseinrichtung, wobei hier nun auch die Halterungen und Führungen der oberen Werkzeugbank 13 und der unteren Werkzeugbank 11 am Maschinengestell 1 gezeigt sind. Gezeichnet ist z. B. der Hubzylinder 14 der oberen Werkzeugbank 13, der ein Verfahren des dort befestigten Werkzeuges 12 nach oben oder nach unten ermöglicht. Zu erkennen ist, daß die Werkzeuge 12 exakt über und exakt unter der zu bearbeitenden Diagonallinie geführt sind. Der Fensterrahmen 4 ist von der festen Rahmenfestanlage 3 am Maschinengestell 1 und von der beweglichen zweiten Rahmenanlage 10 am Rahmenanlageverschiebetisch 2 so gehalten, so daß die zu bearbeitenden Diagonale exakt in der Mitte, also ober- und unterhalb der Werkzeuge 12 und in deren Verfahrrichtung liegt. In diesem Beispiel ist die Positionsverstellschraube 9e an den entsprechenden ausgefahrenen pneumatischen Anschlagzylinder 8 angestoßen. Dies entspricht der Normstellung, die auch in Fig. 2 gezeigt ist, bei der an der Anlage 3 und der Anlage 10 jeweils gleichstarke Rahmenprofile liegen. Die Anlage 10 ist genau auf die Höhe der festen Anlage 3 verfahren.

### Bezugszeichenliste

- 1: Maschinengestell
- 1a: Auflagefläche
- 2: Rahmenanlageverschiebetisch
- 2a: Auflagefläche
- 3: Rahmenfestanlage
- 4: (Fenster-)Rahmen
- 5: Rahmenfixpunkt
- 6: Verschiebeführung
- 7: pneumatischer Verschiebezylinder
- 8: pneumatischer Anschlagzylinder
- 8a, b: Blöcke
- 9a - f: Positionsverstellschrauben
- 10: bewegliche Rahmenanlage
- 11: untere Werkzeugbank
- 12: Werkzeug
- 13: obere Werkzeugbank

## Patentansprüche

1. Vorrichtung zum Bearbeiten der Eckverbindungen von aus Profilstücken geschweißten Rahmen (4), wie z.B. Fenster- oder Türrahmen, mit mindestens einer an den Rahmen (4) verfahrbaren Bearbeitungseinheit (11, 13) und mit an den Außenseiten der die jeweilige Eckverbindung bildenden Profilstücke zur Anlage gelangenden Anschlagmitteln, wobei ein Anschlagmittel als Rahmenanlage (10) auf einem Rahmenanlageverschiebetisch (2) angeordnet ist, der mittels eines Verschiebesystems in Diagonalrichtung des Rahmens (4) verschiebbar ist, **dadurch gekennzeichnet, daß** zum Halten des Rahmens (4) in der Bearbeitungsposition nur zwei Anschlagmittel vorgesehen sind, wobei das eine Anschlagmittel als Rahmenfestanlage (3) fest am Maschinengestell (1) angeordnet und das verschiebbare Anschlagmittel mittels eines Verschiebe- und Arretiersystems in vorgebbare Stellungen verfahrbar ist.

2. Vorrichtung nach Anspruch 1, **dadurch gekennzeichnet daß** die beiden Anschlagmittel jeweils zwei in seitlichem Abstand nebeneinander angeordneten Anschlägen aufweist.

3. Vorrichtung nach Anspruch 1 oder 2, **dadurch gekennzeichnet, daß** die Rahmenfestanlage (3) und die bewegliche Rahmenanlage (10) einen Winkel von 90° einschließen.

4. Vorrichtung nach einem der Ansprüche 1 bis 3, **dadurch gekennzeichnet, daß** der Rahmenanlageverschiebetisch (2) eindimensional im 45°-Winkel zu einer der Rahmenanlagen (3, 10) verschiebbar ist.

5. Vorrichtung nach einem der vorhergehenden Ansprüche, **dadurch gekennzeichnet, daß** das Verschiebe- und Arretiersystem einen - bevorzugt pneumatisch betriebenen - Verschiebezylinder (7) und pneumatisch betriebene Anschläge (8) aufweist.

6. Vorrichtung nach einem der vorhergehenden Ansprüche, **dadurch gekennzeichnet, daß** das Verschiebe- und Arretiersystem elektrische Antriebe und elektrische oder mechanische Anschläge aufweist.

7. Vorrichtung nach einem der Ansprüche 1 bis 3, **dadurch gekennzeichnet, daß** das Verschiebe- und Arretiersystem einen elektrischen Antrieb aufweist, der prozessorgesteuert die gewünschte Stellung anfährt.

## Claims

1. Device for processing the corner connections of frames (4) welded from profile members, such as, for example, window frames or door frames, with at least one processing unit (11, 13) movable at the frame (4) and with abutment means coming into contact with the outer sides of the profile members forming the respective corner connection, wherein an abutment means is arranged as frame contact (10) on a frame contact displacing table (2) which is displaceable in diagonal direction of the frame (4) by means of a displacing system, **characterised in that** only two contact means are provided for holding the frame (4) in the processing position, wherein one abutment means is fixedly arranged at the machine structure (1) as frame fixed contact (3) and the displaceable abutment means is movable into presettable settings by means of a displacing and locking system.

2. Device according to claim 1, **characterised in that** the two abutment means each have two abutments arranged at a lateral spacing adjacent to one another.

3. Device according to claim 1 or 2, **characterised in that** the frame fixed contact (3) and the movable frame contact (10) include an angle of 90°.

4. Device according to one of claims 1 to 3, **characterised in that** the frame contact displacing table (2) is displaceable one-dimensionally at a 45° angle to one of the frame contacts (3, 10).

5. Device according to one of the preceding claims, **characterised in that** the displacing and locking system has a - preferably pneumatically operated - displacing cylinder (7) and pneumatically operated abutments (8).

6. Device according to one of the preceding claims, **characterised in that** the displacing and locking system comprises electrical drives and electrical or mechanical abutments.

7. Device according to one of claims 1 to 3, **characterised in that** the displacing and locking system comprises an electrical drive which is movable in processor-controlled manner to the desired setting.

## Revendications

1. Dispositif pour usiner les assemblages d'angles de cadres (4) soudés à partir de pièces de profilés, comme par exemple des châssis de fenêtres ou de portes, comportant au moins une unité d'usinage (11, 13) mobile au niveau du cadre (4) et comportant des moyens de butée qui touchent les côtés extérieurs des pièces de profilés respectives formant chaque assemblage d'angles, dans lequel un moyen de butée est disposé comme pièce d'appui de cadre (10) sur une table de déplacement des pièces d'appui de cadre (2), qui peut être déplacée au moyen d'un système de déplacement dans la direction diagonale du cadre (4), **caractérisé en ce que**, pour retenir le cadre (4) dans la position d'usinage, sont prévus uniquement deux moyens de butée, un moyen de butée étant disposé de façon fixe sur le bâti de machine (1) en tant que pièce d'appui fixe de cadre (3), et le moyen de butée mobile pouvant être déplacé au moyen d'un système de déplacement et de blocage dans des positions prédéterminables.

2. Dispositif selon la revendication 1, **caractérisé en ce que** les deux moyens de butée présentent respectivement deux butées juxtaposées avec un écart latéral.

3. Dispositif selon la revendication 1 ou 2, **caractérisé en ce que** la pièce d'appui fixe de cadre (3) et la pièce d'appui mobile de cadre (10) forment un angle de 90°.

4. Dispositif selon l'une des revendications 1 à 3, **caractérisé en ce que** la table de déplacement des pièces d'appui de cadre (2) peut être déplacée sur une dimension d'un angle de 45° par rapport à une des pièces d'appui de cadre (3, 10).

5. Dispositif selon l'une des revendications précédentes, **caractérisé en ce que** le système de déplacement et de blocage présente un vérin de déplacement (7) - de préférence entraîné par voie pneumatique - et des butées (8) entraînées par voie pneumatique.

6. Dispositif selon l'une des revendications précédentes, **caractérisé en ce que** le système de déplacement et de blocage présente des entraînements électriques et des butées électriques ou mécaniques.

7. Dispositif selon l'une des revendications 1 à 3, **caractérisé en ce que** le système de déplacement et de blocage présente un entraînement électrique, qui prend la position souhaitée de façon commandée par un processeur.
